Europäisches Patentamt

European Patent Office

Office européen des brevets

(19)

(11) Publication number: **0 116 692**
**B1**

(12) **EUROPEAN PATENT SPECIFICATION**

(45) Date of publication of patent specification: **07.01.87**

(51) Int. Cl.⁴: **F 16 C 3/18**

(21) Application number: **83111181.0**

(22) Date of filing: **09.11.83**

(54) Vibrating device.

(30) Priority: **26.01.83 SE 8300373**

(43) Date of publication of application:
**29.08.84 Bulletin 84/35**

(45) Publication of the grant of the patent:
**07.01.87 Bulletin 87/02**

(84) Designated Contracting States:
**DE FR IT**

(56) References cited:
**US-A-3 192 839**
**US-A-3 668 983**

(73) Proprietor: **DYNAPAC AKTIEBOLAG**
**Box 1103**
**S- 171 22 Solna (SE)**

(72) Inventor: **Per, Lilja**
**Borgmästargatan 17**
**S-371 35 Karlskrona (SE)**

(74) Representative: **Falck, Magnus**
**Dynapac Maskin AB Box 1103**
**S-171 22 Solna (SE)**

Courier Press, Leamington Spa, England.

## Description

The present invention relates to a vibrating device including rotatable eccentric shafts journalled coaxially in relation to each other. The invention particularly relates to means for reducing the loads on the bearings of the eccentric shafts.

One problem associated with the journalling of large eccentric forces is that the dimensions of the bearings are extremely large with the attendant danger of the permissible shaft speed limits readily being exceeded. To prevent that, journalling the rotational shaft of an eccentric element in two bearings on each side of the element has been suggested. Owing to the elasticity of the shaft, however, the bearing forces will be extremely unsuitably distributed.

Another way of solving the bearing problem is to journal two separate eccentrics in two bearings each at the respective ends of the common rotational shaft of the eccentrics. This is a comparatively expensive solution, however.

In connection with the design of bearing arrangements for devices with adjustable vibration amplitude, a solution immediately suggesting itself is to arrange the device in the form of two coaxial shafts fitted with eccentrics. A common version of such a device comprises a hollow shaft and a solid shaft arranged inside it. Both shafts are fitted with eccentrics, the hollow shaft being rotatably journalled on the inner solid shaft.

The disadvantage of this bearing arrangement is that the bearing of the inner shaft must be sized for the maximum eccentric force. Furthermore, the eccentric shafts as a rule are stationary in relation to each other during vibration with the attendant danger of pitting readily arising in the rollerway for the bearing arrangements of the hollow eccentric shaft. If a plain bearing is used instead for the outer eccentric to avoid such pitting it will give rise to considerable friction with large adjustment forces as a result. Furthermore, the plain bearing necessitates good lubrication.

In the US-patent No. 3 192 839 the eccentric shafts are coaxially arranged, but as the inner shaft in one of its ends is journalled in the outer shaft, the bearing at this end of the outer shaft must be sized for the maximum eccentric force.

The purpose of the present invention is to achieve a device for journalling large eccentric forces generated by a rotating eccentric element consisting of two or more tubular shafts fitted with eccentric weights, the tubular eccentric shafts being coaxially and concentrically journalled in relation to each other in bearings characterized in that the bearings are arranged independent of each other on separate bearing journals which are secured to the vibration object, and in that a drive shaft comprises a driver which transfers rotational drive to the eccentric shafts without being rigidly coupled thereto, and in that the drive shaft acts to rotate both eccentric shafts in the same direction.

Through the device according to the invention the maximum load on each bearing is reduced to one-fourth, one-sixth, etc of the total eccentric load. Furthermore, pitting is prevented in any bearing since the bearings of each eccentric shaft rotate continuously while the eccentric element is in rotation.

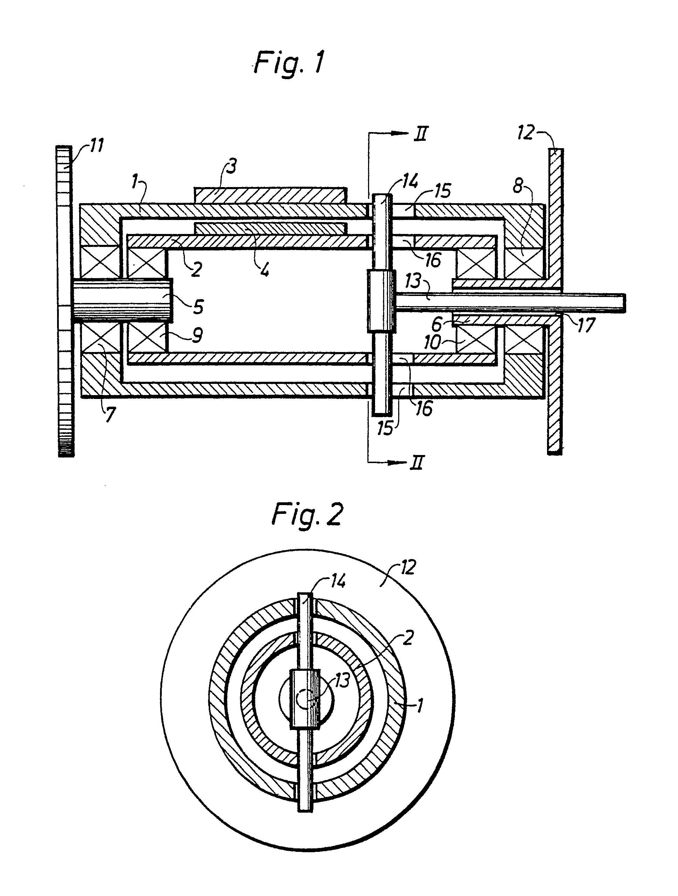

The invention will be described in greater detail with reference to the appended drawing which in Fig. 1 shows a longitudinal cross-section through device in accordance with the invention and in Fig. 2 shows a cross-section through the line II—II in Fig. 1.

The drawing shows a device consisting of two tubular shafts 1 and 2 arranged coaxially in relation to each other, each of which is fitted with an eccentric weight 3 and 4 respectively. The ends of the shafts are individually journalled on separate shaft journals 5 and 6 and in bearings 7 and 8 and 9 and 10 respectively. In the version depicted the shaft journals comprise integral parts of side plates 11 and 12 respectively of a vibrating drum belonging for example to a vibratory roller for compacting soil, asphalt or similar materials.

The eccentric shafts of the device can be driven in various ways. Accordingly, one of the eccentrics may act as a driver for the other or, as in the version shown in the drawing, the eccentric shafts are driven by a drive shaft 13 running through their common centre and a driver shaft 14 fixed rigidly to it at right angles. A condition for realization of the concept of the invention is that the drive shaft with its driver shaft is completely relieved of the eccentric forces generated by the device.

Arranged in the walls of each of the tubular eccentrics 1 and 2 are two openings 15 and 16 arranged diametrically in relation to each other and oriented opposite each other so that the driver shaft 14, which is rigidly mounted on drive shaft 13 and extends on both sides of the drive shaft, can slide out through the openings 15 and 16 in eccentrics 1 and 2 respectively.

By designing the openings 15 and 16 as spiral grooves twisting in opposite directions to each other and arranging the drive shaft 13 to move axially, it is possible to adjust the positions of the two eccentrics 3 and 4 in relation to each other and so bring about an adjustment of the vibration amplitude of the composite eccentric device. Axial movement of drive shaft 13 causes the driver shaft 14 to follow grooves 15 and 16 and thus turn eccentrics 3 and 4 in opposite directions in relation to each other. In the case of eccentrics which are fixed in relation to each other it is not necessary for the tubular eccentrics 1 and 2 to have two diametrically arranged openings 15 and 16 respectively. Under certain circumstances it may be advantageous to fit the eccentrics with only one opening 15 or 16 respectively, which are oriented coaxially in relation to each other. The driver 14 arranged at right angles to drive shaft 13 is then designed with a part protruding in only one direction and interacting with the two openings 15 and 16. To prevent this part from subjecting the drive shaft to centrifugal forces during rotation of drive shaft 13, drive shaft 13 is suitably designed with counter-eccentrics corresponding to the part in question.

In a version with adjustable vibration amplitude the drive shaft 13 is suitably rotatably journalled in a plain bearing bush which is mounted inside one of the tubular shaft journals rigidly fixed to the vibration object.

The invention is not limited to embracing a device consisting of only two eccentric shafts. The eccentric shaft can be divided up into several eccentric weights which are journalled in separate bearings without going beyond the concept of the invention.

Neither is the invention limited to applications for vibratory rollers and to devices with adjustable vibration amplitude. Of significance is that each and every one of the eccentric forces of the eccentric weights journalled in separate bearings is absorbed by the respective bearings of the weights so that the drive shaft is completely relieved of these forces. This means that the driver shaft and the groove or holes in the walls of the concentric weights interacting with it should be so dimensioned that any deflection of the eccentric weights on account of their elasticity is permitted.

## Claims

1. A vibrating device comprising two or more tubular shafts fitted with eccentric weights, the tubular eccentric shafts (1 and 2) being coaxially and concentrically journalled in relation to each other in bearings (7, 8 and 9, 10), and a drive shaft for the eccentric shafts, characterized in that the bearings are arranged independently of each other on bearing journals (5 and 6) which are secured to the vibration object, and in that the drive shaft (13) comprises a driver (14) which transfers rotational drive to the eccentric shafts without being rigidly coupled thereto, and in that the drive shaft acts to rotate both eccentric shafts in the same direction.

2. A device as in Claim 1, characterized in that the drive shaft (13) of the eccentric element extends through the common centre of the eccentric shafts (1, 2) and is journalled in bearings which are completely independent of the shaft bearings (7, 8, 9, 10) and in that the driver (14) of the drive shaft is arranged at right angles to the drive shaft (13) and extends on both sides of it in a radial direction through openings (15, 16) arranged in the walls of the tubular eccentric shafts, the said openings being of such a size in relation to the driver (14) that it and the drive shaft are completely relieved of the eccentric forces generated by the rotation of the eccentric element.

3. A device as in Claim 1, characterized in that the driver (14) extends in a radial direction from the drive shaft (13) through an opening (15 and 16) arranged in the wall of each of the tubular eccentric shafts and in that the eccentricity of the drive shaft (13) caused by the radially oriented driver is eliminated by a counterweight arranged on the drive shaft (13).

## Patentansprüche

1. Schwingungserzeuger mit zwei oder mehr rohrförmigen Wellen mit daran angepaßten Exzentergewichten, wobei die rohrförmigen Exzenterwellen (1 und 2) coaxial und konzentrisch zueinander in Lagern (7, 8 und 9, 10) gelargert sind, und mit einer Antriebswelle für die Exzenterwellen, dadurch gekennzeichnet, daß die Lager unabhängig voneinander auf Lagerachsen (5 und 6) angeordnet sind, die an dem Schwingungsgegenstand befestigt sind, daß die Antriebswelle (13) einen Mitnehmer (14) aufweist, der einen Drehantrieb auf die Exzenterwellen überträgt ohne mit diesen fest verbunden zu sein, und daß die Antriebswelle eine Drehung beider Exzenterwellen in die gleiche Richtung bewirkt.

2. Schwingungserzeuger nach Anspruch 1, dadurch gekennzeichnet, daß die Antriebswelle (13) des Exzenterelements sich durch das gemeinsame Zentrum der Exzenterwellen (1, 2) erstreckt und in Lagern, die vollständig unabhängig von den Lagern (7, 8, 9, 10) der Exzenterwellen sind, gelargert sind, und daß der Mitnehmer (14) der Antriebswelle im rechten Winkel zur Antriebswelle (13) angeordnet ist und auf seinen beiden Seiten sich in radialer Richtung durch in den Mantelwänden der rohrförmigen Exzenterwellen ausgebildete Öffnungen (15, 16) erstreckt, wobie die Öffnungen in Relation zum Mitnehmer (14) zu bemessen sind, daß sie und die Antriebswelle von den durch die Drehung des Exzenterelements erzeugten exzentrischen Kräften vollständig frei sind.

3. Schwingungserzeuger nach Anspruch 1, dadurch gekennzeichnet, daß der Mitnehmer (14) sich in radialer Richtung von der Antriebswelle (13) durch eine in der Mantelwand jedes der rohrförmigen Exzenterwellen angeordnete Öffnung (15 und 16) erstreckt, und daß die durch den radial ausgerichteten Mitnehmer bewirkte Exzentrizität der Antriebswelle (13) durch ein auf der Antriebswelle (13) angeordnetes Gegengewicht eliminiert wird.

## Revendications

1. Un dispositif vibrant comprenant deux ou plus de deux arbres tubulaires équipés de poids excentrés, les arbres excentriques tubulaires (1 et 2) étant tourillonnés d'une manière coaxiale et concentrique l'un par rapport à l'autre dans des paliers (7, 8 et 9, 10), et un arbre d'entraînement des arbres excentriques, caractérisé en ce que les paliers sont montés indépendamment l'un de l'autre sur des tourillons de paliers (5 et 6) qui sont fixés sur l'objet vibrant et en ce que l'arbre d'entraînement (13) comprend un organe d'entraînement (14) qui transmet le mouvement d'entraînement en rotation aux arbres excentriques sans être rigidement accouplé avec eux et en ce que les arbres d'entraînement sont montés de manière à faire tourner les deux arbres excentriques dans le même sens.

2. Un dispositif selon la revendication 1, caractérisé en ce que l'arbre d'entraînement (13) de l'élément excentrique passe par le centre commun des arbres excentriques (1, 2) et est tourillonné dans des paliers qui sont complètement indépendants des paliers d'arbre (7, 8, 9, 10) et en ce que l'organe d'entraînement (14) de l'arbre d'entraînement est monté à angle droit sur l'arbre d'entraînement (13) et s'étend des deux côtés dans le sens radial en traversant des ouvertures (15, 16) ménagées dans les parois des arbres excentriques tubulaires, lesdites ouvertures ayant, par rapport à l'organe d'entraînement (14), des dimensions telles que l'arbre d'entraînement soit complétement dégagé des forces excentriques résultant de la rotation de l'élément excentrique.

3. Un dispositif selon la revendication 1, caractérisé en ce que l'organe d'entraînement (14) s'étend dans le sens radial à partir de l'arbre d'entraînement (13) en traversant une ouverture (15 et 16) ménagée dans la paroi de chacun des arbres excentriques tubulaires et en ce que l'excentricité de l'arbre dentraînement (13) résultant du fait que l'organe d'entraînement est orienté dans le sens radial est annulée par un contrepoids monté sur l'arbre d'entraînement (13).

**Fig. 1**

**Fig. 2**